# EUROPÄISCHE PATENTSCHRIFT

(11) **EP 3 278 692 B1**
(45) Veröffentlichungstag und Bekanntmachung des Hinweises auf die Patenterteilung: **12.08.2020**
(21) Anmeldenummer: 17182519.3
(22) Anmeldetag: 21.07.2017
(51) Int. Cl.: A47J 31/52

(54) **VERFAHREN ZUR BEDIENUNG EINES GETRÄNKEAUTOMATEN AUS EINER VIELZAHL VON GETRÄNKEAUTOMATEN**
METHOD FOR OPERATING A BEVERAGE MACHINE FROM A PLURALITY OF BEVERAGE MACHINES
PROCÉDÉ D'UTILISATION D'UN DISTRIBUTEUR DE BOISSONS À PARTIR D'UNE PLURALITÉ DE DISTRIBUTEURS DE BOISSONS

(30) Priorität: 03.08.2016 DE 102016114351
(43) Veröffentlichungstag der Anmeldung: 07.02.2018
(73) Patentinhaber: Melitta Professional Coffee Solutions GmbH & Co. KG, 32429 Minden (DE)
(72) Erfinder: BUCHHOLZ, Bernd, 32369 Rahden (DE); NAGEL, Jürgen, 32609 Hüllhorst (DE)
(74) Vertreter: Specht, Peter

(56) Entgegenhaltungen:
- EP-A1- 2 279 683
- DE-A1-102012 109 982
- US-A1- 2012 285 986

## Beschreibung

Die vorliegende Erfindung betrifft ein Verfahren zur Bedienung eines einzelnen Getränkeautomaten aus einer Vielzahl von Getränkeautomaten.

Das erfindungsgemäße Verfahren befasst sich mit der Bedienung des Getränkeautomaten, insbesondere eines Heißgetränkeautomaten, vorzugsweise eines Kaffeevollautomaten aus einer Vielzahl von Getränkeautomaten. Dabei kann es sich um Automaten handeln, welche sowohl Heiß- als auch Kaltgetränke ausgeben. Dazu gehören verschiedene Kaffee- und Milchspezialitäten. Wünschenswert ist, Nutzern die Ausgabe von Getränken mit personalisierten (Zubereitungs-)Rezepten zu bieten. Ein personalisiertes Rezept basiert auf personalisierten Einstellungen. Dies betrifft aber z. B. eine Einstellung/Änderung der Einwaage und/oder eine Einstellung/Änderung der Brühtemperatur und/oder eine Einstellung/Änderung des Mahlgrades und/oder eine Einstellung/Änderung des Mengenverhältnisses zwischen Milchschaum und Kaffee bei einem Kaffee-/Milch-Mischgetränk. Insoweit sei beispielsweise auf die DE 10 2010 017 221 A1 dieser Anmelderin verwiesen.

Die DE 10 2012 109 982 A1 offenbart ein durch ein Mobiltelefon gesteuertes Haushaltsgerät. In einer Variante der Bedienung wird eine Bedienung des Haushaltsgerätes durch mehrere Benutzer ermöglicht. Dann wird je Benutzer eine Benutzererkennung bei Annäherung des Mobiltelefons an das Haushaltsgerät ausgelöst und ein Benutzerprofil, welches im Speicher des Haushaltsgeräts hinterlegt ist, aufgerufen. Diese Variante eignet sich für ein Haushaltsgerät, das nur eine begrenzte Anzahl an Nutzern hat. Nach einer anderen Variante der Bedienung werden auf dem Mobiltelefon gespeicherte Daten an das Haushaltsgerät übertragen, um dort Aktionen auszulösen. Nachteilig daran ist, dass bei einer größeren Anzahl von Kunden, beispielsweise in einer Restaurantkette, eine große Menge an Benutzerprofilen am Haushaltsgerät erzeugt und gespeichert werden müsste. Damit Nutzung an einem aus einer Vielzahl von Haushaltsgeräten - z.B. in einem Restaurant einer Restaurantkette, in denen jeweils einer oder mehrere Getränkeautomaten eines Herstellers und/oder gleichen Typs stehen - nicht sinnvoll möglich. D1 offenbart die Merkmale a) bis c) sowie f) und g) zur Bedienung einer Haushaltskaffeemaschine.

Ausgehend vom vorgenannten Stand der Technik ist es die Aufgabe der vorliegenden Erfindung, die Ausgabe eines Getränkes, das mit einem personalisierten Rezept zubereitet wird, in einfacher Weise auch einer größeren Menge von Nutzern zu ermöglichen, so dass das Verfahren zur Bedienung eines Getränkeautomaten aus einer Vielzahl von Getränkeautomaten geeignet ist.

Die Erfindung löst diese Aufgabe durch den Gegenstand des Anspruchs 1.

Geschaffen wird ein Verfahren zur Bedienung eines Getränkeautomaten aus einer Vielzahl von Getränkeautomaten, insbesondere Heißgetränkeautomaten, vorzugsweise Kaffeevollautomaten, jeweils mit einem Bediendisplay und jeweils mit einer Kommunikationseinheit mittels eines mobilen Gerätes mit einer korrespondierenden Kommunikationseinheit, wobei jeder der Getränkeautomaten ausgebildet ist zum Aufbau von Kommunikationsverbindungen mit mehreren mobilen Geräten, gekennzeichnet durch die folgenden Verfahrensschritte:
a) Bereitstellen eines oder mehrerer auf einen Nutzer personalisierten Rezepte(s) für ein Heiß- oder Kaltgetränk, insbesondere für ein Heißgetränk, als Datensatz auf dem mobilen Gerät;
b) Selbständiges Herstellen einer Kommunikationsverbindung zwischen dem Getränkeautomaten und dem mobilen Gerät;
c) Übermitteln des Datensatzes des personalisierten Rezeptes oder der mehreren personalisierten Rezepte des Heiß- oder Kaltgetränks an den Getränkeautomaten;
d) temporäres, d.h. nur vorübergehendes, Speichern des Datensatz auf dem Datenspeicher des Getränkeautomaten;
e) Anzeigen des personalisierten Rezeptes oder der personalisierten Rezepte als Auswahloption(en) auf dem Bediendisplay des Getränkeautomaten;
f) Auslösen eines Zubereitungsvorganges an dem Getränkeautomaten unter Auswahl und ggf. Bestätigung des einen personalisierten Rezeptes oder eines der personalisierten Rezepte;
g) Zubereiten und Ausgeben des personalisierten Getränks; und vorzugsweise
h) Trennen der Kommunikationsverbindung und Löschen des Datensatzes aus dem Datenspeicher des Getränkeautomaten, insbesondere nach einem Trennen der Kommunikationsverbindung,
i) wobei der Getränkeautomat nach dem Aufbau einer Kommunikationsverbindung in Schritt f) ein Auswahlfeld auf dem Bediendisplay freischaltet, wobei durch manuelle Aktivierung dieses Auswahlfeldes das oder die personalisierten Rezepte angezeigt werden.

Der Getränkeautomat weist ein Bediendisplay auf, auf welchem ein Nutzer selbst oder beispielsweise in einem Restaurant Bedienpersonal ein bestelltes Getränk auswählen kann. Der Begriff des Bediendisplay ist nicht zu eng zu fassen. Es kann sich um einen Touchscreen handeln, an dem sowohl optische Anzeigen z.B. der personalisierten Rezepte als auch Bedieneingaben möglich sind oder um eine Kombination aus einer oder mehreren Anzeigen und dazu separaten Eingabemitteln wie Bedientasten.
Der Getränkeautomat kann beispielsweise als Vor-Ort-Ausgabegerät in Kaufhäusern, Restaurants und Restaurantketten oder aber in Kantinen oder dgl. genutzt werden.

Die Bedienung des Getränkeautomaten erfolgt mit Unterstützung eines mobilen Gerätes aber nicht ausschließlich mit diesem mobilen Gerät. Dies ist besonders vorteilhaft. Denn derart werden zwar auf einfache Weise Rezepte übermittelt, das Ausgeben bedarf aber am Gerät einer Bestätigung, was sinnvoll und vorteilhaft ist, damit auch bewusst nur das jeweilige Rezept - Z.B. von einem Mitarbeiter des Restaurants - zur Zubereitung freigegeben wird, das jeweils auch für einen Kunden zubereitet werden soll.

Das mobile Gerät weist eine Kommunikationseinheit, also ein Kommunikationsmodul, vorzugsweise in Form eines drahtlos Daten übertragenden Moduls - hier Funkmodul genannt - auf. Derartige Module, z.B. Bluetooth-Funkmodule, sind in Handys, Tablet-PC's und dergleichen heute in der Regel serienmäßig eingebaut und dienen dem Aufbau einer Kommunikationsverbindung mit einem Gerät, welches im vorliegenden Fall der Kaffeevollautomat ist. Dieser verfügt über eine korrespondierende Kommunikationseinheit.

Nachfolgend seien die Schritte a) bis h) nochmals näher erläutert.

In dem Schritt a) erfolgt das Bereitstellen eines auf einen Nutzer personalisierten Rezeptes oder mehrerer auf einen Nutzer personalisierten Rezepte für ein Heiß- oder Kaltgetränk, insbesondere für ein Heißgetränk, als Datensatz auf dem mobilen Gerät. Ein personalisiertes Rezept basiert wiederum auf personalisierten Einstellungen. Dies betrifft z. B. eine Einstellung/Änderung der Einwaage und/oder eine Einstellung/Änderung der Brühtemperatur und/oder eine Einstellung/Änderung des Mahlgrades und/oder eine Einstellung/Änderung des Mengenverhältnisses zwischen Milchschaum und Kaffee bei einem Kaffee-/Milch-Mischgetränk. Derart kann der Nutzer auch ohne Kommunikationsverbindung mit dem Getränkeautomaten eines oder mehrere personalisierte(r) Rezepte auf seinem mobilen Gerät erstellen bzw. hinterlegen und/oder individuell anpassen.

In einem Schritt b) erfolgt ein selbständiges Herstellen einer Kommunikationsverbindung zwischen dem Getränkeautomaten und dem mobilen Gerät. Die Kommunikationsverbindung kann vorzugsweise über eine geringe Reichweite von weniger als 20 m hergestellt werden. Beispielsweise haben Bluetooth-Verbindungen der Klasse 2 oder auch Bluetooth LE (low energy) -Verbindungen eine Reichweite von etwa max. 8m -12 m.
Die Verfahrensschritte a) und b) sind zeitlich miteinander austauschbar. So ist es theoretisch auch möglich, dass das mobile Gerät erst eine Kommunikationsverbindung mit dem Getränkeautomaten aufbaut und der Nutzer erst dann ein personalisiertes Rezept erstellt.

In einem Schritt c) wird der Datensatz des personalisierten Rezeptes oder der mehreren personalisierten Rezepte für ein Heiß- oder Kaltgetränk an den Kaffeevollautomaten übermittelt. Der Nutzer kann im Fall eines Selbstbedienungs-Getränkeautomaten selbst unter seinen Lieblingsrezepten auswählen oder im Fall eines Restaurants mit Bedienung dem Servicepersonal den Namen seines Lieblingsrezeptes mit.

In Schritt d) wird der Datensatz temporär auf einem Datenspeicher des Kaffeevollautomaten gespeichert.-Die Speicherzeit des Datensatzes auf dem Datenspeicher kann variieren. Der Datensatz kann beispielsweise bei Empfang eines weiteren Datensatzes überschrieben werden. Es geht im Unterschied zur Bedienung von Haushaltsgeräten in der vorliegenden Erfindung nicht darum, das mobile Gerät ausschließlich als erweitertes Bediendisplay für einen Kaffeeautomaten zu nutzen. Kaffeemaschinen von Restaurantketten oder Kantinen sind in der Regel nicht mit dem Internet verbunden. Nach der vorliegenden Erfindung werden die Rezepte im mobilen Gerät erstellt und auf dem mobilen Gerät nach dem Auslösen eines Speichervorganges gespeichert und dann aber nur temporär im Getränkeautomaten vorgehalten. Damit wird der Aufwand der Datenverwaltung entscheidend reduziert, denn die Daten des jeweiligen Nutzers werden nach dem Trennen der Kommunikationsverbindung - z.B. nach dem Ausgeben des Getränkes gelöscht. Dies ist vorteilhaft, da derart die einzelnen Getränkeautomaten nicht mit übermäßig vielen Daten belastet werden und da derart sichergestellt werden kann, dass keine Informationen des Nutzers oder über den einzelnen Nutzer an dem Getränkeautomaten verbleiben.

In einem Schritt e) erfolgt sodann die Anzeige des personalisierten Rezeptes oder der Rezepte als Auswahloption auf dem Bediendisplay des Getränkeautomaten. Hierfür kann eine besonders einfache Menüverwaltung nach Auswahl des Kunden und Auswahl des gewünschten Rezeptes erfolgen. Daneben ist selbstverständlich auch ein Standardmenü verfügbar mit Rezepten welche im Getränkeautomaten hinterlegt sind.

In einem Schritt f) erfolgt das Auslösen eines Zubereitungsvorganges an dem Getränkeautomaten unter Auswahl des personalisierten Rezeptes oder eines der personalisierten Rezepte. Das Auslösen kann an einem Selbstbedienungsautomaten durch den Nutzer selbst erfolgen oder andernfalls durch einen Bediener des Servicepersonals.

Schließlich erfolgt in Schritt g) die Ausgabe des personalisierten Getränks bzw. des Getränkes welches nach dem personalisierten Rezept hergestellt wurde.

Schließlich erfolgt vorteilhaft in einem Schritt h) ein Löschen der Daten des jeweiligen Nutzers nach dem Trennen der Kommunikationsverbindung, beispielsweise nach dem Ausgeben des Getränkes.

Vorteilhafte Ausgestaltungen der Erfindung sind Gegenstand der Unteransprüche.

Es ist von Vorteil, wenn nach dem Schritt f) oder g) ein Entfernen oder Überschreiben des temporär hinterlegten Datensatzes auf einem Datenspeicher des Getränkeautomaten erfolgt. Das Entfernen kann nach einem festgelegten Zeitintervall, z.B. nach zwei Minuten, erfolgen. Alternativ kann der Datensatz beispielsweise auch durch einen nachfolgend empfangenen Datensatz überschrieben werden. Es können allerdings auch mehrere Datensätze mit personalisierten Rezepten von unterschiedlichen mobilen Geräten temporär vorgehalten werden, so dass der Getränkeautomat bei gleichzeitiger Kommunikationsverbindung mit mehreren Nutzern eine Auftragsliste abarbeiten kann.

Es ist von Vorteil, wenn das selbständige Herstellen einer Kommunikationsverbindung zwischen dem Getränkeautomaten und dem mobilen Gerät mittels einer Nahbereichskommunikation-Verbindung, insbesondere mittels Nahfeldverbindung (NFC) oder Bluetoothverbindung, erfolgt. Dadurch werden unbeabsichtigte Kommunikationsverbindungen zu einer Mehrzahl von Nutzern im Umkreis des Getränkeautomaten vermieden, welche ggf. gar nicht an einem Getränk interessiert sind.

Der Getränkeautomat ist dabei vorteilhaft ausgebildet zum gleichzeitigen Aufbau von Kommunikationsverbindungen mit mehreren mobilen Geräten.

Das Bereitstellen gemäß Schritt a) kann durch Vorgabe eines Auswahlmenüs nach Getränkeart auf dem mobilen Gerät erfolgen und nach erfolgter Auswahl der Getränkeart ein Einstellmenü freigeschalten wird, in welchem ein personalisiertes Rezept einstellbar und erstellbar ist, basierend wiederum auf personalisierten Einstellungen. Dies betrifft z. B. eine Einstellung/Änderung der Einwaage und/oder eine Einstellung/Änderung der Brühtemperatur und/oder eine Einstellung/Änderung des Mahlgrades und/oder eine Einstellung/Änderung des Mengenverhältnisses zwischen Milchschaum und Kaffee bei einem Kaffee-/Milch-Mischgetränk.

Das Auswahlmenü und das Einstellmenü sind Bestandteile einer Applikation, einer sogenannten App, welche auf dem mobilen Gerät hinterlegt sind.

Die wählbare Getränkeart kann zumindest die folgenden Getränke umfassen: kalte und heiße Cappuccino, Espresso, Latte Macchiato, Kaffee, Mocca und/oder andere.

Vorzugsweise wird auf dem mobilen Gerät ein Rezept erst infolge eines manuellen Bestätigens eines Speichervorganges durch ein Auslösen eines Feldes des Auswahlmenüs des mobilen Gerätes auf diesem gespeichert. Es erfolgt also ein nicht automatisches Speichern, so dass nur Rezepte gespeichert werden, die der Benutzer wirklich für die Zukunft behalten will.

Bei der Anzeige des Rezeptes und der Bedienung des Getränkeautomaten nach dem Aufbau einer Kommunikationsverbindung in Schritt f) wird ein Auswahlfeld freischaltet, wobei durch manuelle Aktivierung dieses Auswahlfeldes das oder die personalisierten Rezepte angezeigt werden. Dieses Auswahlfeld aktiviert entweder das personalisierte Menü mit den unterschiedlichen Lieblingsgetränken direkt oder es aktiviert ein Menü über die Auswahl der angemeldeten Nutzer. Sofern das Auswahlfeld nicht aktiviert ist, können nur die im Datenspeicher des Getränkeautomaten hinterlegten voreingestellten Rezepte für Standardgetränke abgerufen werden.

Es ist von Vorteil, wenn der Getränkeautomat nach Aufbau von Kommunikationsverbindungen zu mehreren mobilen Geräten mehrere personalisierte Auswahlfelder anzeigt, wobei durch manuelle Aktivierung eines dieser Auswahlfelder das oder die personalisierten Rezepte die auf einem einzigen mobilen Geräte hinterlegt sind.

Das Auswahlfeld kann mit einer Sicherheitscodeabfrage hinterlegt sein, wobei der Sicherheitscode gemeinsam mit dem Datensatz vom jeweiligen mobilen Gerät übermittelt wird. Somit wird verhindert, dass ein unberechtigter Dritter auf das personalisierte Menü eines anderen Nutzers Zugriff erhält.

Das mobile Gerät kann zusätzlich vorteilhaft zur Übermittlung des Datensatzes des personalisierten Rezeptes auch einen Datensatz hinsichtlich einer Gutschrift an den Kaffeevollautomaten übermitteln. Diese Gutschrift kann als Gutschriftcode im Rahmen eines Bezahlsystems mit anderen Anbietern verbunden sein und per Internet an das mobile Gerät übermittelt werden. Dem Getränkeautomat wird dieser Code, vorzugsweise automatisch, übermittelt und es wird eine Preisberechnung auf Basis des Gutscheincodes durch eine Steuerungs- und Recheneinheit 10 des Getränkeautomaten, beispielsweise einem Prozessor, vorgenommen.

Das mobile Gerät kann Daten des Getränkeautomaten empfangen, welche vom mobilen Gerät mittels einer Internetverbindung an den Hersteller des Kaffeevollautomaten, den Zulieferer von Inhaltsstoffen des Heißgetränks und/oder den Inhaber des Kaffeevollautomaten übermittelt werden. Dadurch kann beispielsweise der Hersteller über einen Gerätedefekt informiert werden oder der Zulieferer kann über einen Bedarf des Getränkeautomaten, z.B. Auffüllen von Kaffeepulver oder dergleichen, informiert werden.

Der Getränkeautomat kann einen Datensatz bezüglich der Identifizierung des Kaffeevollautomaten unter einer Mehrzahl an Getränkeautomaten an das mobile Gerät übermitteln. Sofern eine Kommunikationsverbindung mit einem Getränkeautomaten erfolgt ist, kann nach einer möglichen Ausgestaltung keine Kommunikationsverbindung zu weiteren Getränkeautomaten erfolgen. Der Getränkeautomat, mit welchem die Kommunikationsverbindung besteht, kann sodann ein Signal an das mobile Gerät versenden, bezüglich einer Information an welchem Getränkeautomaten die Bedienung durch den Nutzer oder eine Bedienperson erfolgen kann. Dadurch werden Wartezeiten an Getränkeautomaten, z.B. in Großkantinen oder Restaurants, verringert.

Der Getränkeautomat kann beispielsweise ein Ortungssignal anzeigen oder an das mobile Gerät übermitteln welchen den Nutzer in die Lage versetzt den Getränkeautomaten unter einer Mehrzahl von Getränkeautomaten zu identifizieren.

Nachfolgend wird der Gegenstand der Erfindung anhand von Ausführungsbeispielen unter Bezug auf die Zeichnung näher erläutert. Es zeigen:
- Fig. 1: eine schematische Darstellung einer Ausführungsvariante des erfindungs-gemäßen Verfahrens;
- Fig. 2: eine Menüanzeige auf einem mobilen Gerät zum Bereitstellen eines personalisierten Rezeptes für eine erste Getränkeart;
- Fig. 3: eine Menüanzeige auf einem mobilen Gerät zum Bereitstellen eines personalisierten Rezeptes für eine zweite Getränkeart;
- Fig. 4: eine Menüanzeige auf einem mobilen Gerät zum Bereitstellen eines Auswahlmenüs mit mehreren personalisierten Rezepten und mehreren Basisrezepten;
- Fig. 5: eine Bedienfeldanzeige auf einem Getränkeautomaten;
- Fig. 6: eine Menüanzeige zur Auswahl der Einzelrezeptanzeige für einen Nutzer von mehreren an dem Getränkeautomaten angemeldeten Nutzern; und
- Fig. 7: eine Menüanzeige der Einzelrezeptanzeige eines auf dem Getränkeautomaten.

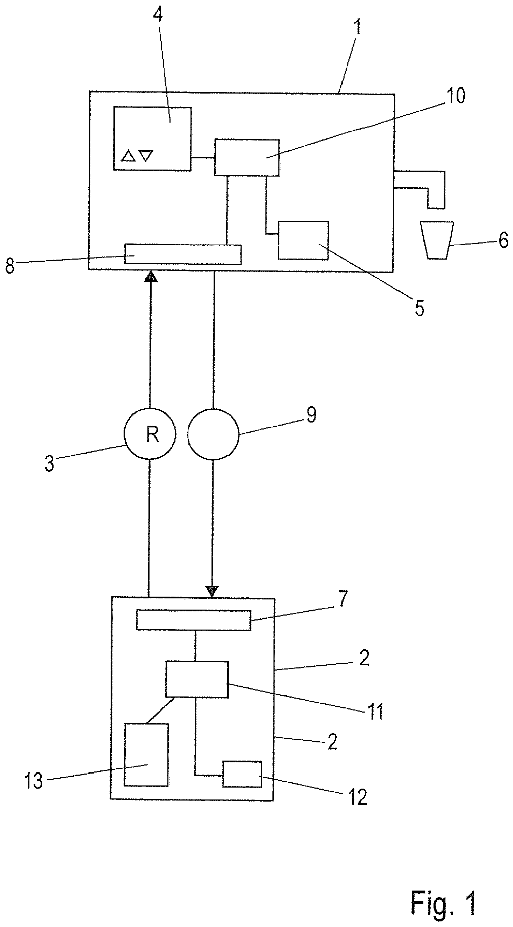

In Fig. 1 bezeichnet das Bezugszeichen 1 einen Kaffeevollautomaten 1, der ein Bediendisplay 4 aufweist. Der Kaffeevollautomat verfügt ferner über Baugruppen zur Zubereitung und Ausgabe von Kaffee- und/oder Milchgetränke auf der Basis von voreingestellten oder personalisierten Rezepten, wie vorstehend in der Beschreibungseinleitung zu den Ansprüchen erläutert. Es handelt sich um einen Kaffeevollautomaten aus einer Vielzahl von Kaffeevollautomaten. Diese Vielzahl kann beispielsweise auf einer entsprechenden Vielzahl von Restaurants einer Restaurantkette oder auf mehrere Kantinen oder dgl. verteilt sein.

Zur Übermittlung personalisierter Rezepte ist ferner ein mobiles Gerät 2 vorgesehen.

Ein vorteilhaftes Verfahren zur Bedienung eines einzelnen Getränkeautomaten aus einer Vielzahl von Getränkeautomaten , insbesondere Heißgetränkeautomaten, vorzugsweise Kaffeevollautomaten, mit jeweils einem Bediendisplay jeweils mit einer Kommunikationseinheit mittels eines mobilen Gerätes mit einer Kommunikationseinheit 7, zeichnet sich durch die folgenden Verfahrensschritte aus:
a) Bereitstellen eines oder mehrerer auf einen Nutzer personalisierten Rezepte(s) (R) für ein Heiß- oder Kaltgetränk, insbesondere für ein Heißgetränk, als Datensatz 3 auf dem jeweiligen mobilen Gerät 2;
b) Selbständiges Herstellen einer Kommunikationsverbindung zwischen einem der Getränkeautomaten 1 - bei einem Annähern an den jeweiligen Getränkeautomaten 1 - und dem jeweiligen mobilen Gerät 2;
c) Übermitteln des Datensatzes 3 des personalisierten Rezeptes R oder der mehreren personalisierten Rezepte des Heiß- oder Kaltgetränks an den Getränkeautomaten 1;
d) temporäres Speichern des Datensatzes 3 auf dem Datenspeicher 5 des Getränkeautomaten 1,
e) Anzeigen des personalisierten Rezeptes R oder der personalisierten Rezepte als Auswahloption(en) auf dem Bediendisplay 4 des Getränkeautomaten 1;
f) Auslösen eines Zubereitungsvorganges an dem Getränkeautomaten 1 unter Auswahl des einen personalisierten Rezeptes R oder eines der personalisierten Rezepte; und
g) Zubereiten und Ausgeben des personalisierten Getränks 6,
h) ein Löschen der Daten des jeweiligen Nutzers nach einem Trennen der Kommunikationsverbindung, beispielsweise nach dem Ausgeben des Getränkes, aus dem Datenspeicher 5 des Getränkeautomaten 1,
i) wobei der Getränkeautomat nach dem Aufbau einer Kommunikationsverbindung in Schritt f) ein Auswahlfeld (53) auf dem Bediendisplay (4) freischaltet, wobei durch manuelle Aktivierung dieses Auswahlfeldes (53) das oder die personalisierten Rezepte (R) angezeigt werden.

Der Kaffeevollautomat 1 und das mobile Gerät 2 verfügen jeweils über eine Kommunikationseinheit 7, 8 zur Nahbereichskommunikation, die miteinander gekoppelt werden, sobald sich das mobile Gerät 2 in einer solchen Nähe zum Kaffeevollautomaten 1 befindet, dass sich die mobilgeräteseitige Kommunikationseinheit 7 und die kaffeevollautomatenseitige Kommunikationseinheit 8 in einem wechselseitigen Erfassungsbereich befinden.

Wenn eine solche Entfernung zwischen dem mobilem Gerät 2 und dem Kaffeevollautomaten 1 erreicht ist, wird eine Kommunikationsverbindung hergestellt und es wird zumindest ein Datensatz an den Kaffeevollautomaten 1 übertragen.

Sodann führt der Kaffeevollautomat 1 eine Reihe von Schritten entsprechend der empfangenen Daten aus.

Die Datenverwaltung des Kaffeevollautomaten 1 und Preisberechnungen wird typischerweise durch eine Steuerungs- und Recheneinheit 10, insbesondere durch einen Prozessor, durchgeführt.

Analog weist auch das mobile Gerät 2 eine Steuerungs- und Recheneinheit 11, z.B. einen Prozessor, und einen Datenspeicher 12 auf, wobei diese Elemente auch eine bauliche Einheit bilden können. Ein Display 13 des mobilen Gerätes 2 zur Anzeige von Menüs eines Apps ist in Fig. 1 nur schematisch dargestellt.

Die Daten bzw. der Datensatz wird nur temporär gespeichert. Bei Restaurantketten oder in großen Kantinen ist von einer großen Menge an Nutzern/Kunden auszunehmen, von denen ein Teil eine jeweilige Filiale nur einmalig besucht. Daher ist ein Vorhalten von sämtlichen Nutzerprofilen an sämtlichen Kaffeevollautomaten nicht sinnvoll vorstellbar.

Es können sämtliche Datensätze an personalisierten Rezepten des jeweiligen Nutzers direkt nach dem Aufbau der Kommunikationsverbindung an den Kaffeevollautomaten 1 übermittelt werden.

Alternativ kann auch durch das mobile Gerät 2 zunächst nur ein Datensatz mit einer Maske hinsichtlich der verschiedenen Rezepte an den Kaffeevollautomaten übermittelt werden. Jedes Rezept ist dabei mit einem Code versehen. Bei Auswahl eines Getränkes wird der Code an das mobile Gerät 2 an den Kaffeevollautomaten übermittelt und das konkrete personalisierte Rezept wird wiederum durch das mobile Gerät 2 an den Kaffeevollautomaten übermittelt.

Das Generieren der Daten in Bezug auf personalisierte Rezept, erfolgt dabei an dem mobilen Gerät 2 zum Beispiel im Rahmen der dortigen Ausführung eines Computerprogramms, das heute üblicherweise als Applikation oder kurz nur als App bezeichnet wird. Das Auswählen einer oder mehrerer Funktionen kann auf Bedien-Oberflächen des mobilen Gerätes zum Beispiel dadurch erfolgen, dass eine Getränkeart auswählbar ist, zum Beispiel Kaffee, Cappuccino, Espresso, usw., ausgewählt wird.

Das Auswählen der Getränkeart und die Einstellung des Getränkes können individuell erfolgen, ohne dass das mobile Gerät 2 bereits mit dem Kaffeevollautomaten 1 kommuniziert. Als Auswählen einer oder mehrerer Funktionen des Kaffeevollautomaten kann aber zum Beispiel auch eine Temperaturvorgabe für einzelne Getränkezutaten des Heißgetränks und/oder eine Mengenvorgabe für die Zutaten oder eine Vorgabe von Mischungsverhältnissen solcher Zutaten erfolgen. Durch die Vorgabe solcher Daten kann eine Auswahl einer oder mehrerer Funktionen des Kaffeevollautomaten, nämlich zum Beispiel eine Dosierfunktion und/oder eine Heizfunktion, erfolgen. Die Einstellungen dieser Funktionen können vorzugsweise erst bei Übertragung des gewünschten Rezeptes an den Kaffeevollautomaten erfolgen.

Die übermittelten Daten können auch Datensätze zu mehreren Rezepten enthalten, welche von einem mobilen Gerät an den Kaffeevollautomaten übermittelt werden. Dann stehen die Daten, mit denen der Nutzer zum Beispiel ein persönliches Profil für einzelne oder mehrere Getränke spezifiziert hat, beim Kaffeevollautomaten selbst zur Verfügung, so dass der Bediener Heißgetränke entsprechend dem jeweiligen persönlichen Profil beim Kaffeevollautomaten abrufen kann. Der Bediener des Kaffeevollautomaten ist beispielsweise eine Bedienung in einem Restaurant. Im Fall eines Selbstbedienungsautomaten kann der Nutzer auch der Inhaber des mobilen Geräts selbst sein.

Nach der Ausgabe des Heißgetränkes wird der Datensatz bezüglich des personalisierten Rezeptes und/oder der Rezepte gelöscht bzw. nur über einen limitierten Zeitraum vorgehalten. Bei einer großen Menge von Kunden z.B. in einer Restaurantkette werden derart im Datenspeicher des jeweiligen Kaffeevollautomaten nicht weiter erforderliche personalisierte Rezepte gelöscht.

Bevorzugt erfolgt der Datenaustausch zwischen dem mobilen Gerät 2 und dem Kaffeevollautomaten 1 durch eine Bluetoothverbindung vorzugsweise mit einem Sendebereich von zumindest 3m bis 8 m. Dies umfasst sowohl Bluetooth Low Energy (BLE), Bluetooth 2.0 als auch Smart Bluetooth.

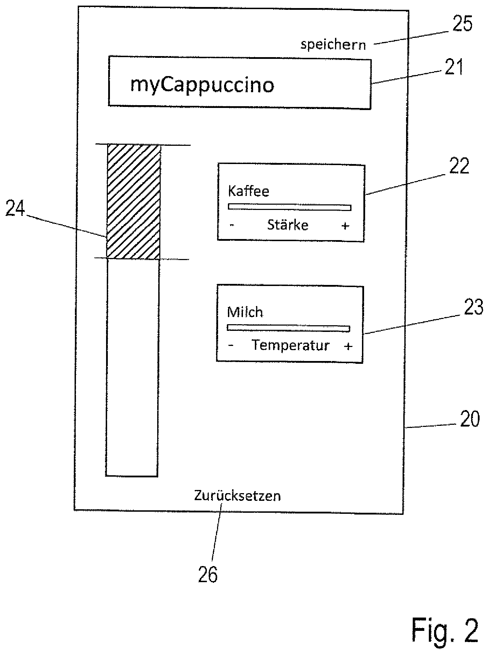

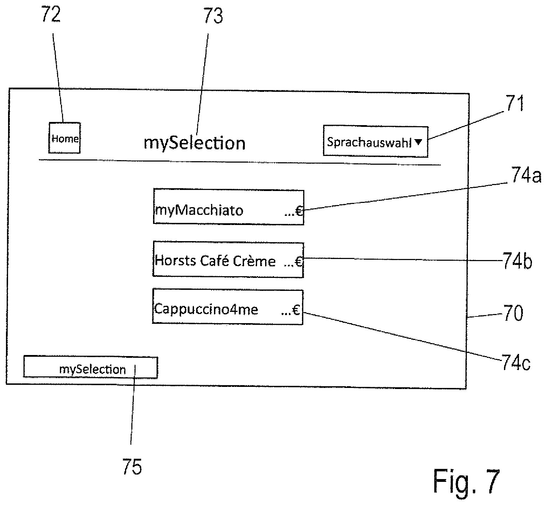

Nachfolgend werden anhand der Fig. 2 bis 7 mögliche Varianten der Einstellungen am mobilen Gerät 2 und am Kaffeevollautomaten 1 näher erläutert.

Fig. 2 zeigt ein Beispiel für eine Bedienoberfläche mit einem Einstellmenü 20 auf einem Mobiltelefon als mobiles Gerät.

Ein "Feld" ist nachfolgend vorzugsweise ein Einstell- und/oder Eingabefeld zum Eingeben einer Information und/oder zum Anzeigen einer Information.

Das Einstellmenü umfasst ein Namensfeld 21, in welches der Nutzer einen Namen für das personalisierte Getränk eingeben kann. Zudem umfasst das Einstellmenü 20 mehrere Zutatenfelder 22 und 23. Das Zutatenfeld 22 kann aktiviert werden, um beispielsweise die Kaffeestärke (Menge an Kaffeemehl) einzustellen. Bei aktiviertem Zutatenfeld 23 kann die Temperatur und die Quantität an Milch und/oder Milchschaum eingestellt werden. Die Einstellung der Quantitäten bzw. des Verhältnisses der Zutaten zueinander selbst kann anhand eines Schiebebalkens 24 erfolgen.

Weiterhin weist das Einstellmenü 20 ein Feld 25 zum Auslösen eines Speichervorgangs der eingestellten Zutaten auf. Es erfolgt somit keine automatische Speicherung der eingegebenen Daten direkt beim Eingeben der Daten auf dem mobilen Gerät ohne eine Bestätigung - die u.a. den Nachteil eines ungewollten Speicherns von nicht zur Speicherung vorgesehenen Rezepten bzw. zugehörigen Datensätzen mit sich bringen kann - sondern nur eine Speicherung, wenn eine manuelle Auslösung des Speichervorganges erfolgt. Das Einstellmenü 20 kann weiter ein Feld 26 zum Zurücksetzen des Einstellvorgangs auf eine Werkseinstellung aufweisen. Das erste Einstellmenü 20 kann spezifisch für eine Kaffeesorte wie Cappuccino vorgesehen sein.

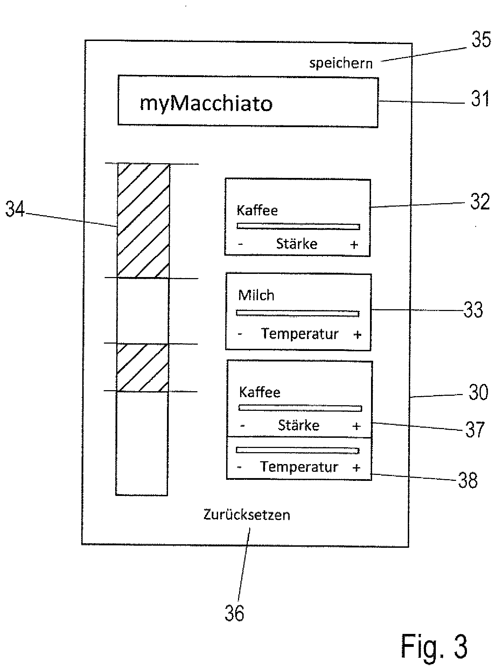

Fig. 3 zeigt ein zweites Einstellmenü 30 mit entsprechend zu Fig. 2 einem Feld 35 zum Auslösen eines Speichervorgangs der eingestellten Zutaten und einem Feld 36 zum Zurücksetzen des Einstellvorgangs auf eine Werkseinstellung. Des Weiteren ist ein Namensfeld 21 zur Eingabe des Namens des personalisierten Getränkes angegeben. In diesem Fall wird eine Macchiato-Variante kreiert. Weiterhin sind mehrere Zutatenfelder 32,33 und 37 vorgesehen. Die Zutatenfelder 32, 37 zur dienen zur Einstellung der Stärke und ggf. auch zur Einstellung der Quantität zweier nacheinander abgegebener Kaffeeportionen. Das Zutatenfeld 33 dient der Einstellung der Temperatur der Milch oder eines Milchschaumes und ggf. auch der Quantität der Milch. Zusätzlich kann an einem Feld 38 die Temperatur der zugegebenen Kaffeesorte eingestellt werden.

Die Quantitäten der einzelnen Zutaten können anhand des Schiebebalkens 34 angezeigt und/oder eingestellt werden.

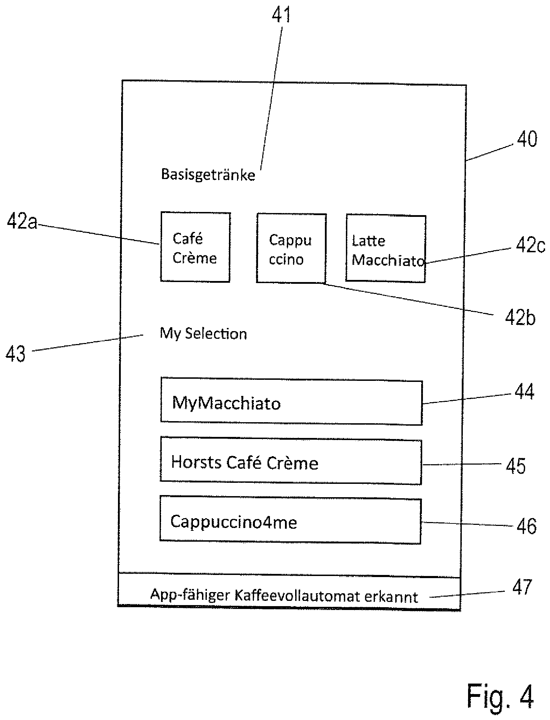

Fig. 4 zeigt die Benutzeroberfläche eines Auswahlmenüs 40 auf einem Mobiltelefon als mobiles Gerät.

Die Anzeigefelder 41 und 43 präsentieren eines oder mehreren vorgespeicherten Rezepten (z.B. Kaffee, Cappuccino usw., zubereitet nach vorgespeicherten Standardrezepten der Maschine). Die (Bedien-)Felder 42a, 42b und 42c können bei Berührung aktiviert werden und stellen sogenannte Getränkearten dar. Durch die Auswahl einer der Getränkearten kann bereits eine Vorselektionierung an Zutaten vorgenommen werden.

Die Felder 44, 45 und 46 stehen für bzw. entsprechen bereits personalisierten Rezepte, welche durch eine Aktivierung noch geändert werden können.

Das Feld 47 ist ein Anzeigefeld mit welchen das mobile Gerät 2 den Nutzer informiert, dass eine Kommunikationsverbindung mit einem Kaffeeautomaten 1 aufgebaut wurde.

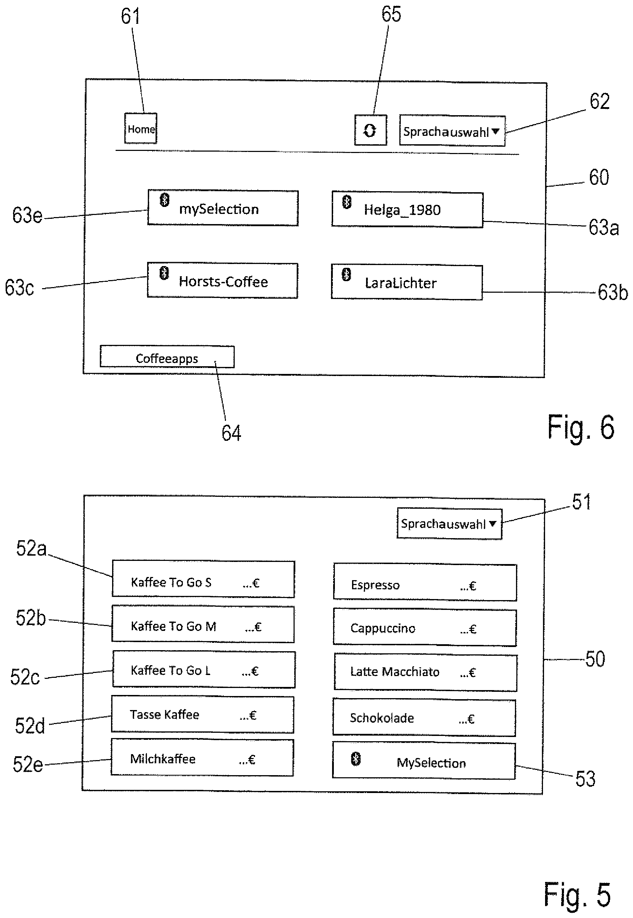

Fig. 5 stellt ein Grundmenü 50 an dem Bediendisplay 4 des Kaffeevollautomaten 1 dar. Dabei sind voreingestellte und auf dem Datenspeicher des Kaffeevollautomaten 1 hinterlegte Grundrezepte wie z.B. "Kaffee to Go" oder "Milchkaffee" durch Bedienung der Felder 52 a-e wählbar und es erfolgt eine Information hinsichtlich des Preises des jeweiligen Getränkes.

Weiterhin ist ein Auswahlfeld 53 mit dem Namen "MySelection" vorgesehen. Das Grundmenü 50 umfasst ein Feld 51 bei dessen Betätigung die Sprache der Anzeige umgestellt werden kann.

Bei Aktivierung dieses Auswahlfeldes 53 kann bei mehreren am Gerät angemeldeten Nutzern auf ein Kundenauswahlmenü 60 gewechselt werden. Das Kundenauswahlmenü 60 umfasst ein Feld 62 bei dessen Betätigung die Sprache der Anzeige umgestellt werden kann. Ein weiteres Feld 65 ist ein Reload-Feld zum Reaktivieren des Systems. Schließlich ist ein Feld 61 z.B. mit dem Namen "Home" vorgesehen, mit welchem der Kaffeevollautomat in das Grundmenü 50 zurückkehren kann.

Wie in dem Kundenauswahlmenü erkennbar, werden bei mehreren angemeldeten Kunden entsprechende Kundenfelder 63a-63d angezeigt. Bei Aktivierung der Kundenfelder 63a-63d wird auf ein personalisiertes Auswahlmenü 70 eines einzelnen Nutzers umgeschaltet.

Bei nur einem am Gerät angemeldeten Nutzer wird bei Aktivierung dieses Auswahlfeldes 53 direkt auf das personalisierte Auswahlmenü 70 gewechselt.

Dieses personalisierte Auswahlmenü 70 umfasst ein Feld 72 z.B. mit dem Namen "Home" vorgesehen, mit welchem der Kaffeevollautomat in das Grundmenü 50 zurückkehren kann.

Das Auswahlmenü 70 umfasst ein Feld 71, bei dessen Betätigung die Sprache der Anzeige umgestellt werden kann. Der Menüname 73 ist frei vom Kunden im mobilen Gerät einstellbar und wird entsprechend auf dem Display des Kaffeevollautomaten angezeigt.

Die Felder 74a bis 74c geben die jeweiligen personalisierten Rezepte wieder und ggf. auch einen Preis des jeweiligen Rezeptes. Der Preis kann individuell für jedes Rezept, z.B. nach Umfang der eingesetzten Zutaten, berechnet werden oder mit einem Preis versehen sein, welcher sich nach der jeweiligen Getränkeart richtet.

Durch Aktivierung eines der Felder 74a bis 74c oder durch Aktivierung sowohl eines der Felder 74a bis 74c und eines Zusatzfeldes - hier als Feld "MySelection" bezeichnet, kann die Ausgabe des Getränkes nach dem personalisierten Rezept erfolgen.

Das Auswahlmenü 40 (Fig. 4) kann benutzerspezifisch angepasst sein. So kann z.B. eine spezielle Zutat, welche im Kaffeevollautomaten mit der vorgeschriebenen Rezeptur zubereitet werden soll, welche jedoch nicht verfügbar ist, deaktiviert bzw. eingegraut sein, so dass der Bediener erkennt, dass die Auswahl eines bestimmten Rezeptes nicht möglich ist.

Das Auswahlmenü 40 kann zudem weitere Zutaten für mehrere Sorten an Heißgetränken umfassen, so z.B. einen oder mehrere Geschmackszusätzen, wie z.B. Mandel-, Vanille- oder Nussaromen.

Im Auswahlmenü hinaus sind auch Zubereitungsparameter individuell hinterlegbar und können abgeändert werden: Umfang der zugeführten Wassermenge, Temperatur und/oder Druck.

Weitere Zubereitungsparameter können der Grad und die Dauer des Aufschäumens des Milchschaums und/oder die Art des Geschmackszusatzes sein.

Bei der Herstellung der Kommunikationsverbindung in Schritt I kann zudem ein Erkennungssignal durch den Kaffeevollautomaten übertragen werden, so dass das mobile Gerät die Daten in einer für das jeweilige Display des Kaffeevollautomaten angepassten Weise übermittelt. So kann die Anzeige des Nutzerprofils je nach Displaygröße des Kaffeevollautomaten variieren.

Die Menümaske kann vorzugsweise eine Auswahl an Getränkenamen für am Kaffeevollautomaten wählbare Heißgetränke umfassen. Bevorzugt ist die Menümaske an das Display des jeweiligen Kaffeevollautomaten 4 angepasst. Die Menümaske kann auf dem mobilen Gerät 1 anhand des Erkennungssignals A für das jeweilige Display gerätespezifisch angepasst sein/werden.

Auf diese Weise können die Heißgetränke auch abweichend von Herstellervorgegebenen Namen auch restaurantspezifische Namen aufweisen.

Der jeweilige Name des Heißgetränks kann mit einem Identifikationscode ID versehen sein. So erfolgt bei Auswahl des entsprechenden Heißgetränks in der Menümaske eine Datenübertragung des Identifikationscodes ID an das mobile Gerät.

Anhand des Identifikationscodes ID erfolgt nunmehr die Abfrage der voreingestellten unternehmens- oder benutzerspezifischen Zusammensetzung für das ausgewählte Heißgetränk durch das mobile Gerät.

Alternativ zur Übermittlung einer Menümaske mit ID-Codes kann auch die komplette Rezeptur für alle personalisierten Getränke an den Kaffeevollautomaten übermittelt und dort temporär hinterlegt werden.

Vom Nutzer wird somit nicht erwartet, komplexe Auswahlmenüs am Kaffeevollautomaten zu bedienen. Die letzte Auswahl und das Auslösen es Zubereitungsvorganges erfolgen nach wie vor durch den Nutzer oder eine Bedienung am Kaffeevollautomaten 4, allerdings befinden sich die personalisierten Zubereitungsrezepte auf dem mobilen Gerät 1 und können dort hinterlegt sein oder aus dem Internet oder einer Cloudanwendung geladen werden.

Die Bedienung des Kaffeevollautomaten kann auch ohne die Anwesenheit eines mobilen Gerätes 1 anhand des Grundmenüs 50 erfolgen. Wird allerdings eine Kommunikationsverbindung mit einem entsprechenden mobilen Gerät 1 hergestellt, so kann die Funktionalität des Kaffeevollautomaten erweitert und benutzer- und/oder es können unternehmensspezifische Zubereitungsrezepte in einem personalisierten Auswahlmenü 70 genutzt werden, ohne dass es eines gesonderten Überspielens der Daten auf den Kaffeevollautomaten bedarf.

Auf diese Weise können auch aktuell geänderte oder kreierte Kaffeeprodukte über eine firmeninterne Internetseite implementiert und/oder auf mobile Geräte 1 überspielt werden, ohne dass es eines Software-updates des Kaffeevollautomaten 4 bedarf.

Die Datensätze des Menüs sind bevorzugt in Form eines sogenannten Apps auf einem Smartphone oder einem Tablet hinterlegt.

Besonders bevorzugt wird zur Datenübertragung zwischen dem Kaffeevollautomaten 4 und dem mobilen Gerät 1 eine sogenannte BLE-Kommunikation (Bluetooth Low Energy) genutzt. Diese Art der Datenübertragung wird herstellerübergreifend für alle Arten von Handys bzw. Smartphones, z.B. iOS oder Android, ohne Einschränkungen unterstützt.

Die Reichweite der BLE-Kommunikation ist ähnlich zu Bluetooth 2.0 auf durchschnittlich 10 m begrenzt. Sobald ein Kaffeevollautomat 1 in dieser Reichweite zum Smartphone ist, verbindet sich dieser mit dem Smartphone. Bei dieser Verbindung wird bereits das Erkennungssignal A übertragen. Da die via Bluetooth übertragenen Datenmengen lediglich sehr gering sein sollten, so verbleiben die jeweiligen Rezepte auf dem mobilen Gerät und erst nach Auswahl eines speziellen Rezeptes wird dieses einzeln an den Kaffeevollautomaten übertragen.

Alternativ zu Bluetooth kann auch NFC, also Nahfeldkommunikation, als Datenübertragungsvariante genutzt werden.

In einer besonders bevorzugten Variante des erfindungsgemäßen Verfahrens erfolgt eine Übertragung von Informationen an den Hersteller. Typischerweise sind Kaffeevollautomaten nicht mit dem Internet verbunden.

Im Rahmen einer weiteren Variante der vorliegenden Erfindung können jedoch vom Kaffeevollautomaten an das mobile Gerät versandte Daten auch an den Hersteller oder Dritte über Internetverkehr weitergeleitet. So erhält der Hersteller beispielsweise Informationen hinsichtlich anfallender Service- und Wartungsarbeiten oder ein Lieferant oder eine Zentrale eines Unternehmens erhält ggf. Informationen über einen baldigen Mangel an Kaffee und/oder Milch.

Bevorzugt werden die persönlichen Rezepte in einem zusätzlichen, speziell hervorgehobenen Menü hervorgehoben. Diese werden zusätzlich zu den bestehenden Kaffees des Betreibers angezeigt. Sollte der Anwender einen bevorzugten Kaffee im App modifiziert haben, den der Betreiber nicht anbietet, so wird kein vollständiges Menü angezeigt sondern lediglich die auf der jeweiligen Maschine ausführbaren Rezepte dargestellt. Der Nutzer kann also genau die und vorteilhaft auch nur die Rezepte auswählen, welche auf der Maschine ausführbar, z.B., da der jeweilige Betreiber nur diese Rezepte auch anbietet bzw. zur Ausgabe zulässt.

So kann es Betreiber geben, die keine Kaffeeprodukte anbieten, die mit Milch zubereitet werden. Es könnte aber auch Betreiber geben, die es nicht zulassen wollen, dass die zur Zubereitung des jeweiligen Kaffees benutzte Kaffeemenge geändert wird oder über einen gewissen Rahmen hinaus geändert wird.

Das Verfahren kann für eine Vielzahl verschiedener Getränkeautomaten genutzt werden, die allesamt gleichen Typs bzw. gleicher Bauart sind. Das Verfahren kann aber vorzugsweise nicht nur für eine Vielzahl verschiedener Getränkeautomaten genutzt werden, die allesamt gleichen Typs bzw. gleicher Bauart sind sondern auch an Getränkeautomaten verschiedener Bauart und/oder verschiedener Einstellung. Das Computerprogramm des Mobilgerätes - in der Regel eine App - kann vielmehr eine vorgegebene Bandbreite von Einstellungen aufweisen und ermöglichen und eine Anzahl vorgespeicherter Rezepte aufweisen, die über einzelne Gerätetypen hinausgehen. Dies ist kein Problem, da nach dem Aufbau der Kommunikationsverbindung ein Abgleich zwischen Mobilgerät und Maschine erfolgt.

Die Abgabemenge an Kaffeepulver, Milch, etc. wird durch den Kaffeevollautomaten 1 ermittelt. Somit wird die Quantität der Zutaten des favorisierten Kaffees bestimmt und durch den Kaffeevollautomaten ein Endpreis ermittelt. Dieser Endpreis kann bei Übermittlung des favorisierten Rezeptes vorab ermittelt und angezeigt werden.

Der Kaffeevollautomat 1 verfügt vorzugsweise über Sensoren zur Mengenermittlung und/oder Volumenermittlung, so z.B. Füllstandsmessgeräte.

Zur Benutzerverwaltung können mehrere Nutzer zeitgleich an der Kaffeemaschine angemeldet sein. Jeder der Nutzer mit einem mobilen Gerät und einer entsprechenden Software bzw. App. wird automatisch mit dem Kaffeevollautomat 1 verbunden. Der Bediener, z.B. ein Angestellter des Geschäftes, in welchem der Kaffeevollautomat 1 aufgestellt ist, kann am Kaffeevollautomaten 1 das personalisierte Rezept des Heißgetränkes auswählen. Hierfür kann der Kunde dem Nutzer den Namen des Rezeptes angeben, welches er auszuwählen hat. Der Nutzer kann mehrere Bestellungen zugleich auswählen, welche der Kaffeevollautomat abarbeitet. Es können also die Rezepte unterschiedlicher Kunden zugleich auf dem Bediendisplay des Kaffeevollautomaten ausgewählt werden. Somit können mehrere Kunden gleichzeitig an dem Kaffeevollautomaten 1 angemeldet sein und der Bediener kann eine Sequenz zur Ausgabe auswählen bzw. einstellen.

Im Fall einer Selbstbedienungs-Kaffeevollautomaten 1 kann der Nutzer zu der nächsten freien Maschine geleitet werden. Dabei wird das Rezept an diesen Kaffeevollautomaten geleitet. Der Nutzer erhält eine Information an welchem Kaffeevollautomat 1 die Ausgabe seines Getränkes erfolgt. Dabei wird der eigentliche Brühvorgang aber an dem Kaffeevollautomaten 1 ausgelöst, welcher zur Zubereitung des Getränks geeignet und ausgelegt ist.

Insgesamt weist die vorliegende Erfindung oder weisen einzelne bevorzugte Ausführungsvarianten eine Reihe von Vorteilen auf:
Das erfindungsgemäße Verfahren dient vorzugsweise dem gewerblichen Einsatz und vorzugsweise nicht dem Hausgebrauch, denn es ist besonders für eine sehr große Anzahl an Nutzern, so auch für mehrere tausende Nutzer, geeignet.

Eine Authentifizierung bzw. manuelle Kopplung zwischen dem mobilen Gerät und dem Kaffeevollautomaten 1 ist nach einer besonders bevorzugten Ausführung des Verfahrens nicht vorgesehen und nicht notwendig. Die Kommunikationsverbindung zwischen dem mobilen Gerät und dem Kaffeevollautomaten 1 baut sich automatisch auf. Es ist auch keine Erstinitialisierung oder Kopplung wie z. B. bei BT-Techniken im Auto notwendig.

Der Aufbau der Kommunikationsverbindung ist unabhängig von einem spezifischen Typ an Kaffeevollautomaten 1 allgemein möglich, d. h. die Verbindung wird mit beliebigen entsprechend ausgelegten und mit einem entsprechenden Programm zur Durchführung des Verfahrens versehenen Kaffeevollautomaten 1 aufgebaut. Dies ist wichtig für professionelle Anwendungen, da insbesondere dann ein Nutzer unabhängig von einem Standort oder einer Einzelmaschine die Möglichkeiten der Ausgabe eines Getränkes nach einem personalisierten Rezept nutzen kann. Dabei ist es auch denkbar und realisierbar, dass je nach Typ und Ausgestaltung des Kaffeevollautomaten 1 bzw. insbesondere des Kaffeevollautomaten - leichte Anpassungen vorgenommen werden, wenn beispielsweise ein Automat nicht sämtliche Einstellmöglichkeiten bietet, welche nach der App des mobilen Gerätes vorgesehen sind.

Jeder Getränkeautomat erkennt vorzugsweise selbständig den Nutzer.

Nach einer bevorzugten Variante können mehrere Nutzer an einem Kaffeevollautomaten 1 gleichzeitig angemeldet sein. Dies ist in einem Restaurant vorteilhaft oder einer Kantine. Es ist dann bevorzugte, Namen oder Kennungen für die einzelnen Kunden an dem Automaten anzuzeigen, so dass die eigentliche Bedienperson benutzerindividuell die Zubereitung starten kann. Die Kommunikationsverbindung ist insofern vorzugsweise personalisierbar, d. h. sie kann einer vom Betreiber definierten App zugeordnet werden, so dass der personalisierte Zugang zu einem Kaffeevollautomaten 1 durch den Betreiber kontrolliert werden. Dies hat insbesondere Vorteile bei einem Kettengeschäft, also bei mehreren Geschäften, welche zu einem Unternehmen oder einem Unternehmensverbund gehören

Vorzugsweise stehen bei Mehrbenutzeranmeldung jedem einzelnen Nutzer seine eigenen Produkte bzw. seine eigenen personalisierten Rezepte zur Auswahl und zur Verfügung.

Der Erkennungsraum bzw. Abstand zwischen dem Kaffeevollautomaten 1 und dem mobilen Gerät kann skalierbar sein, so dass er auf die jeweiligen räumlichen Gegebenheiten anpassbar ist.

Die Kommunikationsverbindung kann nach einer weiteren Variante konfigurierbar sein beispielsweise in Bezug auf Bezahlung mit individueller Berechnung und/oder auf spezielle Produktmerkmale und/oder Eigenschaften der jeweiligen personalisierten Rezepte.

Denkbar ist auch, bei dem Verfahren verschiedene Zugangsebenen bzw. -level zu definieren. So kann der Getränkeautomat nur frei für Angestellte bedienbar sein oder aber auch für eine Bezahlung für Externe, z.B. Kunden eines Restaurants oder eines Unternehmens ausgelegt sein.

Der Getränkeautomat bietet die personalisierten Rezepte des Nutzers vorzugsweise aktiv auf dem Bediendisplay an, beispielsweise in Form einer Begrüßung Das mobile Gerät muss nur mitgeführt werden, beispielsweise in einer Tasche. Es sind keine Aktionen/Aktivitäten auf dem mobilen Gerät durch den Nutzer notwendig.

## Patentansprüche

1. Verfahren zur Bedienung eines einzelnen Getränkeautomaten aus einer Vielzahl von Getränkeautomaten, insbesondere Heißgetränkeautomaten, vorzugsweise Kaffeevollautomaten (1), jeweils mit einem Bediendisplay (4) und jeweils mit einer Kommunikationseinheit (8), mittels eines mobilen Gerätes (2) mit einer Kommunikationseinheit (7), wobei jeder der Getränkeautomaten ausgebildet ist zum Aufbau von Kommunikationsverbindungen mit mehreren mobilen Geräten (2), **gekennzeichnet durch** die folgenden Verfahrensschritte:
a) Bereitstellen eines oder mehrerer auf einen Nutzer personalisierten Rezepte(s) (R) für ein Heiß- oder Kaltgetränk, insbesondere für ein Heißgetränk, als Datensatz (3) auf dem jeweiligen mobilen Gerät (2);
b) Selbständiges Herstellen einer Kommunikationsverbindung zwischen einem der Getränkeautomaten (1) - bei einem Annähern an diesen Getränkeautomaten (1) - und dem jeweiligen mobilen Gerät (2);
c) Übermitteln des Datensatzes (3) des personalisierten Rezeptes (R) oder der mehreren personalisierten Rezepte des Heiß- oder Kaltgetränks an den Getränkeautomaten (1);
d) temporäres Speichern des Datensatz (3) auf dem Datenspeicher (5) des Getränkeautomaten (1);
e) Anzeigen des personalisierten Rezeptes (R) oder der personalisierten Rezepte als Auswahloption(en) auf dem Bediendisplay (4) des Getränkeautomaten (1);
f) Auslösen eines Zubereitungsvorganges an dem Getränkeautomaten (1) unter Auswahl des einen personalisierten Rezeptes (R) oder eines der personalisierten Rezepte; und
g) Zubereiten und Ausgeben des personalisierten Getränks (6), und
h) Löschen des Datensatzes (3) aus dem Datenspeicher (5) des Getränkeautomaten (1), insbesondere nach einem Trennen der Kommunikationsverbindung,
i) wobei der Getränkeautomat nach dem Aufbau einer Kommunikationsverbindung in Schritt f) ein Auswahlfeld (53) auf dem Bediendisplay (4) freischaltet, wobei durch manuelle Aktivierung dieses Auswahlfeldes (53) das oder die personalisierten Rezepte (R) angezeigt werden.

2. Verfahren nach Anspruch 1, **dadurch gekennzeichnet, dass** nach dem Schritt f) oder g) zum Löschen des Datensatzes (3) gemäß Schritt h) ein Entfernen oder Überschreiben des temporär hinterlegten Datensatzes (3) von dem Datenspeicher (5) des Getränkeautomaten (1) erfolgt.

3. Verfahren nach Anspruch 1 oder 2, **dadurch gekennzeichnet, dass** das selbständige Herstellen einer Kommunikationsverbindung zwischen dem Getränkeautomaten (1) und dem mobilen Gerät (2) mittels einer Nahbereichskommunikation-Verbindung, insbesondere mittels Nahfeldverbindung (NFC) oder Bluetoothverbindung, erfolgt.

4. Verfahren nach einem der vorhergehenden Ansprüche, **dadurch gekennzeichnet, dass** das Bereitstellen gemäß Schritt a) durch Vorgabe eines Auswahlmenüs (40) zur Auswahl nach Getränkeart (42a, 42b, 42c) auf dem mobilen Gerät (2) erfolgt und nach erfolgter Auswahl der Getränkeart (42a, 42b, 42c) ein Einstellmenü (20, 30) freigeschaltet wird, in welchem Details des personalisierten Rezeptes einstellbar sind, wodurch ein personalisiertes Rezept erstellt wird.

5. Verfahren nach Anspruch 4, **dadurch gekennzeichnet, dass** ein erstelltes personalisiertes Rezept erst infolge eines manuellen Bestätigens eines Speichervorganges durch ein Auslösen eines Feldes (25) des Auswahlmenüs des mobilen Gerätes auf diesem gespeichert wird.

6. Verfahren nach Anspruch 4 oder 5, **dadurch gekennzeichnet, dass** die Getränkeart zumindest die folgenden Getränke umfasst: Cappuccino, Espresso, Latte Macchiato, Kaffee, und/oder Mocca.

7. Verfahren nach Anspruch 4, 5 oder 6, **dadurch gekennzeichnet, dass** das personalisierte Rezept folgende Details aufweisen kann:
- eine Einstellung eines Volumens an Wasser und/oder Milch und/oder Milchschaum, und/oder
- eine Einstellung einer Einwaage an Kaffeemehl und/oder
- eine Einstellung einer Brühtemperatur und/oder eine
- Einstellung/Änderung eines Mahlgrades und/oder
- eine Einstellung/Änderung eines Mengenverhältnisses zwischen Milchschaum und Kaffee bei einem Kaffee-/Milch-Mischgetränk und/oder
- eine Einstellung der Schaumqualität und/oder
- eine Einstellung der Temperatur von Milch und/oder Milchschaum und/oder
- Temperatur der Heißwasserausgabe und/oder
- Zubereitungsparameter der Kaffeeerstellung wie z. B. Anpressdruck.

8. Verfahren nach einem der vorhergehenden Ansprüche, **dadurch gekennzeichnet, dass** der Getränkeautomat nach Aufbau von Kommunikationsverbindungen zu mehreren mobilen Geräten (2) mehrere personalisierte Auswahlfelder (63a, 63b, 63c, 63d) anzeigt, wobei durch manuelle Aktivierung eines dieser Auswahlfelder (63a, 63b, 63c, 63d) ein personalisiertes Getränk nach einem personalisierten Rezeptes (R), welches auf einem einzigen mobilen Geräte (2) hinterlegt ist, ausgegeben wird.

9. Verfahren nach einem der vorhergehenden Ansprüche, **dadurch gekennzeichnet, dass** das mobile Gerät (2) zusätzlich zur Übermittlung des Datensatzes (3) des personalisierten Rezeptes (R) einen Datensatz hinsichtlich einer Gutschrift an den Getränkeautomaten (1) übermittelt.

10. Verfahren nach einem der vorhergehenden Ansprüche, **dadurch gekennzeichnet, dass** das mobile Gerät (2) Daten (9) des Getränkeautomaten (1) empfängt, welche vom mobilen Gerät (2) mittels einer Internetverbindung an den Hersteller des Getränkeautomaten, den Zulieferer von Inhaltsstoffen des Getränks und/oder den Inhaber des Getränkeautomaten (1) übermittelt werden

11. Verfahren nach einem der vorhergehenden Ansprüche, **dadurch gekennzeichnet, dass** der Getränkeautomat einen Datensatz bezüglich der Identifizierung des Getränkeautomaten (1) unter einer Mehrzahl an Getränkeautomaten (1) an das mobile Gerät (2) übermittelt.

12. Verfahren nach einem der vorhergehenden Ansprüche, **dadurch gekennzeichnet, dass** die Getränkeautomaten gleicher Bauart sind.

13. Verfahren nach einem der vorhergehenden Ansprüche, **dadurch gekennzeichnet, dass** die Getränkeautomaten verschiedener Bauart und/oder verschiedener Einstellung sind.

14. Verfahren nach einem der vorhergehenden Ansprüche, **dadurch gekennzeichnet, dass** nach Aufbau einer Kommunikationsverbindung und nach einem Datenabgleich zwischen dem Mobilgeräte und dem Getränkeautomaten nur die Rezepte hervorgehoben bzw. aktivierbar sind, welche der jeweilige Getränkeautomat auch zubereiten kann.

15. Verfahren nach einem der vorhergehenden Ansprüche, **dadurch gekennzeichnet, dass** der Getränkeautomat ein Ortungssignal anzeigt oder an das mobile Gerät (2) übermittelt, zur Identifizierung des Getränkeautomaten (1) unter einer Mehrzahl von Getränkeautomaten.

## Claims

1. Method of operating an individual beverage machine from a plurality of beverage machines, particularly hot beverage machines, preferably coffee machines (1), each an operator display (4) and each with a communications unit (8), by means of a mobile apparatus (2) with a communications unit (7), wherein each of the beverage machines is constructed for establishing communications connections with several mobile apparatus (2), **characterised by** the following method steps:
a) providing a recipe or several recipes (R), which is or are personalised to a user, for a hot or cold beverage, particularly for a hot beverage, as a data set (3) on the respective mobile apparatus (2);
b) automatic creation of a communications connection between one of the beverage machines (1) - in the case of approach to this beverage machine (1) - and the respective mobile apparatus (2);
c) transmitting the data set (3) of the personalised recipe (R) or the several personalised recipes of the hot or cold beverage to the beverage machine (1);
d) temporary storage of the data set (3) at the data memory (5) of the beverage machine (1);
e) display of the personalised recipe (R) or the personalised recipes as a selection option or selection options on the operator display (4) of the beverage machine (1);
f) triggering a preparation process at the beverage machine (1) with selection of the personalised recipe (R) or one of the personalised recipes; and
g) preparing and delivering the personalised beverage (6), and
h) erasing the data set (3) from the data memory (5) of the beverage machine (1), particularly after interruption of the communications connection,
i) wherein the beverage machine after establishing a communications connection in step f) frees a selection field (53) on the operator display (4), wherein the personalised recipe or personalised recipes (R) is or are displayed by manual activation of this selection field (53).

2. Method according to claim 1, **characterised in that** after the step f) or g) for erasing the data set (3) according to step h) a removal or overwriting of a temporarily filed data set (3) from the data memory (5) on the beverage machine (1) takes place.

3. Method according to claim 1 or 2, **characterised in that** the automatic creation of a communications connection between the beverage machine (1) and the mobile apparatus (2) is carried out by means of near-field communications connection, particularly a near-field connection (NFC) or a Bluetooth connection.

4. Method according to any one of the preceding claims, **characterised in that** preparation according to step a) is carried out by presetting a selection menu (40) for selection according to kind of beverage (42a, 42b, 42c) on the mobile apparatus (2) and after selection of the kind of beverage (42a, 42b, 42c) a setting menu (20, 30) is freed, in which details of the personalised recipe are settable, whereby a personalised recipe is created.

5. Method according to claim 4, **characterised in that** a created personalised recipe is stored on the selection menu only as a consequence of manual confirmation of a storage process by triggering a field (25) of the selection menu of the mobile apparatus.

6. Method according to claim 4 or 5, **characterised in that** the kind of beverage comprises at least the following beverages: cappuccino, espresso, latte macchiato, coffee and/or mocha.

7. Method according to claim 4, 5 or 6, **characterised in that** the personalised recipe can comprise the following details:
- setting a volume of water and/or milk and/or milk foam and/or
- setting a content weight of coffee grinds and/or
- setting a brewing temperature and/or
- setting/changing a degree of grinding and/or
- setting/changing a quantity ratio between milk foam and coffee in the case of a coffee/milk mixed beverage and/or
- setting the foam quality and/or
- setting the temperature of milk and/or milk foam and/or
- temperature of the hot water delivery and/or
- preparation parameters of the coffee production, such as, for example, pressing pressure.

8. Method according to any one of the preceding claims, **characterised in that** the beverage machine after establishing communications connections to several mobile apparatus (2) displays several personalised selection fields (63a, 63b, 63c, 63d), wherein through manual activation of one of these selection fields (63a, 63b, 63c, 63d) a personalised beverage according to a personalised recipe (R), which is filed on an individual mobile apparatus (2), is supplied.

9. Method according to any one of the preceding claims, **characterised in that** the mobile apparatus (2) additionally to transmission of the data set (3) of the personalised recipe (R) transmits a data set with respect to a quality legend at the beverage machine (1).

10. Method according to any one of the preceding claims, **characterised in that** the mobile apparatus (2) receives data (9) of the beverage machine (1), which are transmitted by the mobile apparatus (2) by means of an Internet connection to the manufacturer of the beverage machine, to the supplier of ingredients of the beverage and/or to the owner of the beverage machine (1).

11. Method according to any one of the preceding claims, **characterised in that** the beverage machine transmits to the mobile apparatus (2) a data set with respect to the identification of the beverage machine (1) amongst a plurality of beverage machines (1).

12. Method according to any one of the preceding claims, **characterised in that** the beverage machines are of the same mode of construction.

13. Method according to any one of the preceding claims, **characterised in that** the beverage machines are of different mode of construction and/or different setting.

14. Method according to any one of the preceding claims, **characterised in that** after establishing a communications connection and after data synchronisation between the mobile apparatus and the beverage machine only the recipes which the respective beverage machine can actually prepare are emphasised or activatable.

15. Method according to any one of the preceding claims, **characterised in that** the beverage machine displays a location signal or transmits it to the mobile apparatus (2) for identification of the beverage machine (1) from amongst a plurality of beverage machines.

## Revendications

1. Procédé d'utilisation d'un distributeur de boissons parmi un ensemble de distributeurs de boissons notamment des distributeurs de boissons chaudes, de préférence des distributeurs de café totalement automatiques (1), avec un affichage de service (4) et une unité de communication (8) ainsi qu'un mobile (2) avec une unité de communication (7), chacun des distributeurs de boissons étant réalisé pour établir des liaisons de communication avec plusieurs mobiles (2),
procédé **caractérisé par** les étapes suivantes consistant à :
a) fournir une ou plusieurs recettes (R) personnalisées en fonction d'un utilisateur pour une boisson chaude ou une boisson froide notamment pour une boisson chaude, comme jeu de données (3) sur le mobile (2) respectif,
b) établir soi-même une liaison de communication entre l'un des distributeurs de boissons (1) - à l'approche vers ce distributeur de boissons (1) - et le mobile (2) respectif,
c) transmettre le jeu de données (3) de la recette personnalisée (R) ou de plusieurs recettes personnalisées de boissons chaudes ou froides au distributeur de boissons (1),
d) enregistrer provisoirement le jeu de données (3) dans la mémoire de données (5) du distributeur de boissons (1),
e) afficher la recette personnalisée (R) ou les recettes personnalisées comme options de sélection sur l'affichage de service (4) du distributeur de boissons (1),
f) déclencher une préparation par le distributeur de boissons (1) en sélectionnant une recette personnalisée (R) ou l'une des recettes personnalisées, et
g) préparer et distribuer la boisson personnalisée (6), et
h) effacer le jeu de données (3) dans la mémoire de données (5) du distributeur de boissons (1) notamment après coupure de la liaison de communication,
i) le distributeur de boissons, après établissement d'une liaison de communication dans l'étape f), libérant un champ de sélection (53) sur l'affichage de service (4), et par l'activation manuelle de ce champ de sélection (53), afficher la ou les recettes personnalisées (R).

2. Procédé selon la revendication 1,
**caractérisé en ce que**
après l'étape f) ou g) d'effacement du jeu de données (3) selon l'étape h), on élimine ou on surscrit le jeu de données (3) enregistré de manière temporaire dans la mémoire de données (5) du distributeur de boissons (1).

3. Procédé selon la revendication 1 ou 2,
**caractérisé en ce que**
l'établissement personnel d'une liaison de communication entre le distributeur de boissons (1) et le mobile (2) se fait par une liaison de communication en champ proche, notamment par une liaison en champ proche (NFC) ou par une liaison Bluetooth.

4. Procédé selon l'une des revendications précédentes,
**caractérisé en ce que**
la fourniture selon l'étape a) se fait en prédéfinissant un menu de sélection (40) pour sélectionner un type de boisson (42a, 42b, 42c) sur le mobile (2) et une fois la sélection du type de boisson (42a, 42b, 42c) faite, on libère un menu de réglage (20, 30) dans lequel on règle les détails de la recette personnalisée pour avoir ainsi une recette personnalisée.

5. Procédé selon la revendication 4,
**caractérisé en ce qu'**
une recette personnalisée n'est enregistrée en mémoire qu'après la confirmation manuelle d'une opération de mise en mémoire par le déclenchement d'un champ (25) du menu de sélection du mobile pour y être mémorisé.

6. Procédé selon la revendication 4 ou 5,
**caractérisé en ce que**
le type de boissons comprend au moins l'une des boissons suivantes : cappuccino, Expresso, Latte Macchiato, café et/ou moka.

7. Procédé selon la revendication 4, 5 ou 6,
**caractérisé en ce que**
la recette personnalisée peut comporter les détails suivants :
- réglage du volume d'eau et/ou de lait et/ou de mousse de lait et/ou
- réglage de la dose de poudre de café et/ou
- réglage de la température d'infusion et/ou
- réglage/modification du type de mouture et/ou
- réglage/modification du rapport quantitatif entre la mousse de lait et le café dans les cas d'une boisson mélangée café-lait et/ou
- réglage de la qualité de la mousse et/ou
- réglage de la température du lait et/ou de la mousse de lait et/ou
- température de l'eau chaude distribuée et/ou
- paramètre de préparation du café comme par exemple la pression.

8. Procédé selon l'une des revendications précédentes,
**caractérisé en ce que**
le distributeur de boissons après l'établissement de la liaison de communication vers plusieurs mobiles (2), affiche plusieurs champs de sélection personnalisé (63a, 63b, 63c, 63d), et par activation manuelle de l'un des champs de sélection (63a, 63b, 63c, 63d), on fournit une boisson personnalisée selon une recette personnalisée (R) qui est enregistrée sur un unique mobile (2).

9. Procédé selon l'une des revendications précédentes,
**caractérisé en ce que**
le mobile (2) transmet en plus de la transmission des jeu de données (3) de la recette personnalisée (R), également un jeu de données concernant un crédit transmis au distributeur de boissons (1).

10. Procédé selon l'une des revendications précédentes,
**caractérisé en ce que**
le mobile (2) reçoit les données (9) du distributeur de boissons (1) qui sont transmises par le mobile (2) par l'intermédiaire d'une liaison internet au fabricant de distributeurs de boissons, aux fournisseurs des composants de la boisson et/ou du propriétaire du distributeur de boissons (1).

11. Procédé selon l'une des revendications précédentes,
**caractérisé en ce que**
le distributeur de boissons transmet vers le mobile (2) un jeu de données concernant l'identification du distributeur de boissons (1) parmi l'ensemble des distributeurs de boissons (1).

12. Procédé selon l'une des revendications précédentes,
**caractérisé en ce que**
les distributeurs de boissons sont de même construction.

13. Procédé selon l'une des revendications précédentes,
**caractérisé en ce que**
les distributeurs de boissons sont des constructions différentes et/ou ont des réglages différents.

14. Procédé selon l'une des revendications précédentes,
**caractérisé en ce qu'**
après établissement d'une liaison de communication et après comparaison des données entre le mobile et le distributeur de boissons, seules sont mises en avant ou activés les recettes que le distributeur de boissons respectif peut préparer.

15. Procédé selon l'une des revendications précédentes,
**caractérisé en ce que**
le distributeur de boissons affiche un signal de localisation et/ou le transmet au mobile (2) pour identifier le distributeur de boissons (1) parmi un ensemble de distributeurs de boissons.
